Europäisches Patentamt

European Patent Office

Office européen des brevets

(19)

(11) Numéro de publication : **0 044 234**
**B1**

(12) **FASCICULE DE BREVET EUROPÉEN**

(45) Date de publication du fascicule du brevet :
26.09.84

(21) Numéro de dépôt : **81400975.9**

(22) Date de dépôt : **18.06.81**

(51) Int. Cl.³ : **C 08 F255/06**, C 08 F   2/02 //
(C08F255/06, 212/08)

(54) **Procédé de préparation de copolymères de greffage par irradiation.**

(30) Priorité : **10.07.80 FR 8015343**

(43) Date de publication de la demande :
**20.01.82 Bulletin 82/03**

(45) Mention de la délivrance du brevet :
**26.09.84 Bulletin 84/39**

(84) Etats contractants désignés :
**AT BE CH DE GB IT LI LU NL SE**

(56) Documents cités :
**FR-A- 1 202 891**
**FR-A- 1 347 881**
**FR-A- 2 294 205**
**GB-A-   872 219**
**GB-A- 1 047 053**

(73) Titulaire : **Société Chimique des Charbonnages**
**Tour Aurore Place des Reflets Cedex no 5**
**F-92080 Paris la Défense 2 (FR)**

(72) Inventeur : **Lemattre, Maurice**
**1, rue du 8 mai 1945**
**F-60170 Cambronne les Ribecourt (FR)**
Inventeur : **Roussel, Robert**
**3, avenue de Noyon**
**F-62670 Mazingarbe (FR)**
Inventeur : **Wirth, René**
**4, rue Berthelot**
**F-62300 Lens (FR)**

(74) Mandataire : **Rieux, Michel et al**
**C d F Chimie S.A. Service Propriété Industrielle Tour**
**Aurore - Cedex no. 5**
**F-92080 Paris la Défense 2 (FR)**

**0 044 234**

**Description**

La présente invention concerne un procédé de préparation de compositions à base de styrène polymérisé. Elle a plus particulièrement pour objet un procédé de fabrication de copolymère greffés à base de styrène et d'un polymère caoutchouteux.

Le polystyrène est une matière thermoplastique qui grâce à la facilité avec laquelle il peut être obtenu et travaillé est largement utilisé dans l'industrie des plastiques. Malheureusement son emploi est limité par suite de son manque de tenue à la chaleur et de sa médiocre résistance au choc.

Afin d'améliorer ces propriétés on a proposé d'utiliser des copolymères de styrène avec d'autres monomères comme l'acrylonitrile ou les acrylates. On a aussi proposé d'utiliser des polymères greffés obtenus par polymérisation de styrène sur un polymère caoutchouteux. Comme polymères caoutchouteux on a proposé les homo- ou les copolymères de butadiène. Cependant étant donné que ces caoutchoucs insaturés sont très sensibles à l'oxydation et à l'action de la lumière on obtient des produits dont les propriétés physiques et mécaniques sont altérées.

Pour résoudre ce problème on a proposé de substituer aux caoutchoucs insaturés des caoutchoucs en grande partie saturés par exemple des caoutchoucs d'éthylène, propylène et des caoutchoucs d'éthylène, propylène et d'un monomère polyinsaturé. Cependant leur emploi présente de nombreuses difficultés: en particulier, ces caoutchoucs faiblement insaturés ayant un faible taux de double liaison ne favorisent pas le greffage de styrène sur l'élastomère. On obtient alors des compositions qui présentent un taux de greffage, c'est-à-dire un taux de polystyrène greffé sur l'élastomère très faible, au plus voisin de 2. Par ailleurs une observation au microscope permet de constater que les compositions obtenues sont constituées de gros globules de caoutchouc qui sont dispersés dans la composition sans aucune cohésion et dont la taille peut atteindre 10 à 15 micromètres. La composition obtenue avec une telle dispersion n'a pas une microstructure fine ce qui ne lui confère pas de bonnes propriétés optiques.

En dehors des problèmes décrits ci-dessus et qui concernent la tenue à la chaleur et au vieillissement, la résistance au choc, le taux de greffage de polystyrène, ainsi que la microstructure il est aussi nécessaire pour obtenir des compositions présentant des propriétés intéressantes de résoudre aussi le problème de la réticulation de l'élastomère : lorsque l'on polymérise du styrène en présence des matériaux élastomères du type, éthylène-propylène comportant un monomère polyinsaturé, on obtient des produits bruts greffés comprenant en particulier un copolymère greffé formé par réaction du caoutchouc avec la styrène monomère et des motifs caoutchouteux constitués par des motifs « pontés » c'est-à-dire des motifs de caoutchouc reliés entre eux par des liaisons chimiques. La quantité de caoutchouc « ponté » est donnée par le taux de réticulation que l'on exprime par « l'indice de gonflement » qui est inversement proportionnel au taux de réticulation, ce qui signifie que plus l'indice de gonflement est faible, plus le taux de réticulation est élevé.

Pour résoudre ces problèmes on a proposé des procédés comportant des étapes réactionnelles sophistiquées du type : emploi de mélange de solvants spéciaux, oxydation partielle du caoutchouc avant greffage, polymérisation à étages multiples avec des étapes comportant des procédés de nature différente : masse, suspension. Toutes ces étapes réactionnelles ne sont pas satisfaisantes et conduisent en particulier à des polymères greffés qui présentent encore souvent un faible taux de greffage ainsi qu'un taux de réticulation médiocre et une microstructure grossière.

On a maintenant trouvé un procédé de préparation permettant d'obtenir des compositions de copolymères greffés qui ne présentent pas ces inconvénients.

La présente invention concerne un procédé de préparation de copolymères de greffage formés essentiellement à partir de styrène polymérisé en présence d'un terpolymère caoutchouteux d'éthylène, de propylène et d'une troisième composante définie ci-après caractérisé en ce qu'on polymérise en masse la solution caoutchouteuse de monomères puis on soumet le polymère obtenu à un traitement par irradiation.

La mise en œuvre du procédé conforme à l'invention permet d'obtenir des copolymères greffés présentant un taux de gel élevé compris entre 15 et 30 et le plus souvent compris entre 17 et 25 ainsi qu'un bon indice de gonflement compris entre 6 et 14, le plus souvent entre 8 et 12, cet indice dénotant une bonne réticulation de polymère caoutchouteux. Par ailleurs une observation microscopique des copolymères obtenus selon le procédé de l'invention permet de constater qu'ils présentent une bonne cohésion et une fine microstructure telle que la totalité (100 %) des particules ont une taille inférieure à 2 $\mu$m. De plus la mise en œuvre d'un tel procédé conduit à des copolymères qui présentent des caractéristiques mécaniques améliorées ainsi que de bonnes résistances au vieillissement et à la chaleur.

Selon une caractéristique importante du procédé de l'invention les copolymères de greffage ont non seulement immédiatement après leur fabrication de bonnes caractéristiques mécaniques mais de plus ces caractéristiques mécaniques sont très peu altérées par des traitements mécaniques ultérieurs tels que le boudinage. Les taux de greffage et des indices de gonflement sont également très peu modifiées.

Selon l'invention on soumet à une première étape connue de polymérisation en masse un mélange de caoutchouc à base d'éthylène, de propylène et d'une troisième composante et de styrène. Cette étape de polymérisation en masse est suivie d'une seconde étape qui consiste à soumettre à un traitement d'irradiation le copolymère de greffage obtenu par polymérisation en masse. La troisième composante

2

qui entre dans la composition du caoutchouc utilisé pour la fabrication des copolymères selon l'invention est choisie parmi l'hexadiène-1,4, le dicyclopentadiène, le tricyclopentadiène, le vinyl-5 norbornène-2, l'éthylidène-5 norbornène-2, le méthylène-5 norbornène 2, le (propen-2 yl)-5 norbornène-2, le (hexèn-5yl)-5 norbornène-2, le 4, 7, 8, 9 tétrahydro-indène et l'isopropylidène tétrahydro-indène. De préférence on utilise les caoutchoucs qui ont une teneur en éthylène de 19 à 73 % en poids, une teneur en propylène de 23 à 77 % et une teneur de 4 à 20 % en poids de la troisième composante.

La première étape de polymérisation en masse consiste à introduire dans un autoclave, d'une part le terpolymère caoutchouteux, et d'autre part, le styrène additionné éventuellement d'éthylbenzène. L'autoclave utilisé est muni d'un agitateur, d'un dispositif de chauffage et d'un système de refroidissement. Lorsque tous les réactifs ont été introduits dans l'autoclave, on chauffe sous agitation le mélange réactionnel à une température voisine de 40 °C pendant trois heures de façon à réaliser la dissolution du caoutchouc dans les autres réactifs. Les quantités de réactifs mis en œuvre sont variables. Le styrène et l'éthylbenzène sont utilisés dans des rapports pondéraux éthylbenzène/styrène compris entre 0 et 12, le caoutchouc étant mis en œuvre dans des rapports pondéraux styrène/caoutchouc compris entre 6 et 20 et de préférence entre 7 et 13. Après l'étape de dissolution on ajoute les additifs classiques utilisés dans les procédés de polymérisation en masse : antioxydants tel que di-t-butyl-2,6 paracrésol, méthylène-bis-2,2' (méthyl-4 t-butyl-6 phénol), octadécyl-3 (di-t-butyl-3,5 hydroxy-4 phényl) propionate, tri-(méthyl-2 hydroxy-4 t-butyl-5 phényl)-butane, initiateurs de polymérisation tel que peroxyde de ditertiobutyl ou peroxyde de benzoyle. Tous ces additifs sont utilisés en faible quantité : au plus 0,5 % en poids par rapport au styrène pour ce qui concerne les antioxydants, au plus 0,272 % en poids pour les initiateurs de polymérisation. La polymérisation est conduite à une température comprise entre 80 et 160 °C pendant une durée d'environ 8 heures. Après polymérisation le polymère obtenu est soumis à un traitement thermique puis dévolatilisé et granulé.

Selon l'invention, le copolymère de greffage obtenu après la première étape de polymérisation en masse est soumis à un traitement d'irradiation à l'aide de rayonnements gamma, X ou électroniques. La durée du rayonnement est variable et dépend de l'intensité de rayonnement. Selon l'invention on utilise de préférence un rayonnement d'électrons permettant de soumettre les copolymères à des doses d'irradiation pouvant atteindre 20 Mégarads ($20 \times 10^4$ Gy) pendant quelques secondes. Le rad étant l'unité de dose qui correspond à 100 électron-volts par gramme.

Les copolymères de greffage obtenus selon le procédé de l'invention présentent de bonnes propriétés mécaniques ainsi qu'un bon comportement à la chaleur et au vieillissement. L'ensemble de ces propriétés permet l'utilisation de ces copolymères greffés dans les domaines d'application où l'on exige d'excellentes propriétés mécaniques et physiques, une bonne stabilité au vieillissement et au chauffage et un excellent aspect de surface des pièces finies moulées à l'aide de ces copolymères.

Les exemples suivants illustrent la présente invention.

### Exemple 1

Un réacteur utilisé pour la polymérisation en masse muni d'un système d'agitation, d'un dispositif de chauffage et d'un système de refroidissement est rempli :
de 82,3 parties en poids de styrène,
de  8,2 parties en poids d'éthyl-benzène, et
de 9   parties en poids d'un élastomère

constitué de 55 % d'éthylène, 54 % de propylène et 9 % d'éthylidène-norbornène et présentant une viscosité ML1 + 8 126 °C = 60.

Le mélange réactionnel est agité à 40 °C pendant 3 heures. On ajoute ensuite 0,435 parties en poids d'antioxydant constitué de di-tertiobutylpara-crésol et 0,1 partie en poids de peroxyde de ditertiobutyle. Le mélange réactionnel est ensuite soumis à un chauffage par paliers de façon à ce que sa température finale atteigne 145 °C au bout de 7 heures 50. Après cette phase de chauffage on obtient 81,5 parties de matières solides que l'on traite à chaud à 225 °C pendant 1 heure 50. Après dévolatilisation qui consiste à soumettre le polymère à un traitement thermique à une température comprise entre 200 et 250 °C sous une pression de (9,33 à 10) · $10^4$ Pa (700-750 mm Hg).

La résistance au choc est déterminée selon la norme ASTM D-256-73.

Le Point Vicat est déterminé selon la norme ASTM D 1525-76 : il permet d'exprimer le point de ramollissement suivant la pression.

L'indice de fusion qui exprime la fluidité du produit est déterminé selon la norme ATSM D 1238-73.

Le taux de gel qui exprime le taux de greffage c'est-à-dire la quantité de polystyrène greffé sur l'élastomère est déterminé en agitant à froid dans du toluène, le copolymère greffé puis en centrifugeant l'ensemble ce qui permet de déterminer la quantité de gel insoluble dans le toluène. La masse sèche du polymère insoluble est déterminée en traitant sous vide le gel obtenu précédemment : le pourcentage de gel par rapport à la prise d'essai exprime le taux de gel.

L'indice de gonflement qui permet d'exprimer le taux de réticulation est égal au rapport de la masse de gel à la résine sèche.

Le polymère obtenu présente une granulométrie telle que 100 % ont une dimension inférieure à 2 µm.

La répartition granulométrie est déterminée selon la technique de microscopie électronique décrite par FATO dans J. Electro Micros 14 1965 (20) et qui consiste à utiliser le tetroxyde d'osmium comme révélateur.

Le polymère obtenu est soumis à un rayonnement électronique à l'aide d'un accélérateur qui présente les caractéristiques suivantes.

Puissance : 7,4 kW, 6,2 Millions électro-volts ; durée irradiation : 10 secondes pour un kg de polymère soumis à un rayonnement de 1 mégarad ($10^4$ Gy).

Le tableau 2 indique les propriétés des produits obtenus après des doses d'irradiation différentes.

Ses caractéristiques sont résumées dans le tableau 1.

## Tableau 1

| Point Vicat (°C) 1 kg/50 °C/h | Indice de fusion sous 5 kg à 200 °C (g/10 min) | Résistance au choc kg × cm/cm | Taux de gel | Indice de gonflement | Granulométrie μm |
|---|---|---|---|---|---|
| 104 | 5,5 | 6,3 | 9 | 15,6 | 100 % < 2 75 % < 1,5 50 % < 1 |

## Tableau 2

| Dose irradiation | Point Vicat | Indice de fusion | Résistance au choc | Taux de gel | Indice de gonflement | Granulométrie μm |
|---|---|---|---|---|---|---|
| 5 mégarads (5 × $10^4$ Gy) | 105 | 4,9 | 6,1 | 13 | 12,8 | 100 % < 2 70 % < 1,5 50 % < 1 |
| 10 mégarads (10 × $10^4$ Gy) | 104 | 3,9 | 5,8 | 22,7 | 10,4 | 100 % < 2 70 % < 1,5 45 % < 1,2 |
| 20 mégarads (20 × $10^4$ Gy) | 104 | 3,8 | 5,5 | 24,4 | 9,7 | 100 % < 2 65 % < 1,5 45 % < 1,2 |

Ce tableau permet de constater que les produits irradiés présentent un meilleur taux de gel, un indice de gonflement amélioré, une morphologie plus fine que les produits décrits dans le tableau 1 tout en conservant une bonne résistance au choc.

On soumet ensuite d'une part les produits non irradiés (propriétés décrites dans le tableau 1) et d'autre part les produits irradiés (propriétés décrites dans le tableau 2) à un boudinage à l'aide d'un appareil vendu sous le nom KO-MALAXEUR par la société BUSS (type PR 40). Le tableau 3 résume les propriétés des produits après boudinage.

## Tableau 3

| Origine produit | Point Vicat | Indice de fusion | Résistance au choc | Taux de gel | Indice de gonflement |
|---|---|---|---|---|---|
| Produit non irradié dont les propriétés sont décrites dans le tableau 1 | 104,5 | 7,6 | 2,1 | 3,6 | 16,9 |
| Produit irradié dont les propriétés sont décrites dans le tableau 2. Irradié à 10 mégarads (10 × $10^4$ Gy) | 104,5 | 5,5 | 6,1 | 20,4 | 10,8 |
| Irradié à 20 mégarads (20 × $10^4$ Gy) | 104,5 | 5,8 | 5,4 | 22,6 | 10,0 |

Le tableau 3 montre que seules les propriétés des produits irradiés sont peu altérées même après boudinage.

## Exemple 2

L'exemple 1 est répété mais en utilisant des terpolymères d'éthylène de propylène et de diène différents de celui mis en œuvre dans l'exemple 1. Le tableau 4 indique la nature des terpolymères mis en œuvre les propriétés des produits obtenus. Les quantités des réactifs mis en œuvre sont les mêmes que celles utilisées dans l'exemple 1, sauf que l'essai 3 est réalisé sans antioxydant.

Les produits obtenus sont ensuite comme dans l'exemple 1 soumis à une irradiation électronique à l'aide du même appareil que celui décrit dans l'exemple 1.

Le tableau 5 indique les propriétés des produits irradiés soumis à une irradiation de 10 mégarads ($10 \times 10^4$ Gy).

### Tableau 4

| N° essai | 1 | 2 | 3 |
|---|---|---|---|
| Nature terpolymère | 6,5 % éthylidène norbornène<br>65 % éthylène<br>Viscosité Mooney<br>ML 1 + 8 126 °C = 70 | 11 % éthylidène norbornène<br>45 % propylène<br>Viscosité Mooney<br>ML 1 + 4 100 °C = 90 | 9 % éthylidène norbornène<br>55 % éthylène<br>Viscosité Mooney<br>ML 1 + 8 126 °C = 50 |
| Point Vicat (°C) | 104,5 | 106,5 | 105,5 |
| Indice de fusion | 5,4 | 5,2 | 5,2 |
| Résistance au choc | 7,3 | 8,7 | 8,7 |
| Taux de gel | 12,6 | 6,4 | 7,1 |
| Indice de gonflement | 16,6 | 18,2 | 18,2 |
| Granulométrie μm | 100 % < 2<br>60 % < 1,5<br>30 % < 1 | 100 % < 2<br>50 % < 1,5<br>20 % < 1 | 100 % < 2<br>70 % < 1,5<br>25 % < 1 |

### Tableau 5

| Produit | Produit Essai n° 1 | Produit Essai n° 2 | Produit Essai n° 3 |
|---|---|---|---|
| Point Vicat (°C) | 104,5 | 105,5 | 104,5 |
| Indice de fusion | 4,8 | 4,9 | 4,7 |
| Résistance au choc | 6,6 | 7,6 | 8,1 |
| Taux de gel | 15,3 | 16,3 | 17,8 |
| Indice de gonflement | 11,8 | 9,8 | 10 |
| Granulométrie μm | 100 % < 2<br>70 % < 1,5<br>50 % < 1 | 100 % < 2<br>65 % < 1,5<br>45 % < 1,2 | 100 % < 2<br>70 % < 1,5<br>45 % < 1 |

**Revendications**

1. Procédé de préparation de copolymères de greffage formés essentiellement à partir de styrène polymérisé en présence d'un terpolymère caoutchouteux d'éthylène, de propylène et d'une troisième composante choisie parmi l'hexadiène-1,4, le dicyclopentadiène, le tricyclopentadiène, le vinyl-5 norbornène-2, le éthylidène-5 norbornène-2, le méthylène-5 norbornène-2, le (propèn-2yl)-5 norbornène-2, le (hexèn-5yl)-5 norbornène-2, le 4,7,8,9 tétrahydro-indène et l'isopropylidène tétrahydro-indène caractérisé en ce que l'on polymérise en masse la solution caoutchoutique de monomères, le styrène étant éventuellement additionné d'éthylbenzène dans des rapports pondéraux éthylbenzène/styrène compris entre 0 et 12 %, le caoutchouc étant mis en œuvre dans des rapports pondéraux styrène/caoutchouc compris entre 6 et 20, la polymérisation étant conduite en présence d'antioxydants utilisés en quantité égale au plus à 0,5 % en poids par rapport au styrène et d'initiateurs de radicaux libres utilisés en quantité égale au plus à 0,272 % en poids par rapport au styrène, puis on soumet le polymère obtenu à un traitement par irradiation.

2. Procédé selon la revendication 1 caractérisé en ce que le traitement d'irradiation est effectué à l'aide de rayons gamma, X ou électroniques.

**Claims**

1. A method for preparing graft copolymers formed essentially from styrene polymerized in the presence of a rubber terpolymer of ethylene, propylene and of a third component selected from amongst hexadiene-1,4 dicyclopentadiene, tricyclopentadiene, 5-vinylnorbornene-2,5-ethylidene-norbornene-2, 5-methylene-norbornene-2, 5-2 (propenyl) norbornene-2,5 (5-hexenyl) norbornene-2, 4,7,8,9 tetrahydro-indene and isopropylidene tetrahydro-indene, characterized in that the monomer rubber solution is bulk polymerized, ethylbenzene being possibly added to the styrene in a weight ratio of ethylbenzene/styrene between 0 and 12 %, the rubber being used in a weight ratio of styrene/rubber between 6 and 20, the polymerization being carried out in the presence of antioxidants used in a quantity at most equal to 0.5 % by weight with respect to the styrene and of free radical initiators used in a quantity at most equal to 0.272 % by weight with respect to the styrene, then the polymer obtained is subjected to irradiation treatment.

2. A method according to claim 1, characterized in that the irradiation treatment is carried out using gamma rays, X-rays or electronic rays.

**Ansprüche**

1. Verfahren zur Herstellung von Pfropfcopolymeren, die im wesentlichen aus Styrol, polymerisiert in Gegenwart eines kautschukartigen Terpolymers aus Äthylen, Propylen und einer dritten Komponente ausgewählt aus der Gruppe bestehend aus Hexadien-1,4-dicyclopentadien, Tricyclopentadien, 5-Vinylnorbornen-2, 5-Äthylidennorbornen-2, 5-Methylen-norbornen-2, 5-2(Propenyl)norbornen-2, 5(5-Hexenyl)norbornen-2, 4,7,8,9-Tetrahydro-inden und Isopropylidentetrahydro-inden, gebildet sind, dadurch gekennzeichnet, daß man die kautschukartige Lösung der Monomeren in Masse polymerisiert, wobei dem Styrol eventuell Äthylbenzol in Gewichtsverhältnissen Äthylbenzol/Styrol zwischen 0 und 12 beigegeben wird, der Kautschuk in Gewichtsverhältnissen Styrol/Kautschuk zwischen 6 und 20 eingesetzt wird, die Polymerisation in Gegenwart von Antioxidantien in einer Menge von 0,5 Gew.-% oder mehr in bezug auf Styrol und Initiatoren in Form freier Radikale in einer Menge von 0,272 Gew.-% oder mehr in bezug auf Styrol durchgeführt wird und danach das erhaltene Polymer einer Bestrahlungsbehandlung unterworfen wird.

2. Verfahren nach Anspruch 1, dadurch gekennzeichnet, daß die Bestrahlungsbehandlung mittels γ-Strahlen, Röntgenstrahlen oder Kathodenstrahlen durchgeführt wird.